# EUROPEAN PATENT APPLICATION

(11) **EP 1 130 947 A2**
(43) Date of publication of application: **05.09.2001**
(21) Application number: 01104833.7
(22) Date of filing: 27.02.2001
(51) Int. Cl.: H05B 3/36

(54) **Low voltage power supply for thermocovering elements in general**

(30) Priority: 29.02.2000 IT MI000390
(71) Applicant: CAP IT S.r.l., 20016 Pero (Milano) (IT)
(72) Inventor: Cappelletti,Stefano, 20016 Pero(Milano) (IT)
(74) Representative: Cicogna, Franco

(57) **Abstract**

A device for power supplying professional thermocovering elements for holding under a controlled temperature the tyres of racing motor vehicles and motor cycles comprises a unit (1) to be connected to a socket (2) of the electric main by a cable (3) for power supplying, through a further cable (4), the thermocovering element, the thermocovering element power supply providing a low D.C. voltage and a D.C. current.

## Description

### BACKGROUND OF THE INVENTION

The present invention relates to a device for power supplying with a low voltage professional thermocovering elements, for holding under a controlled temperature the tyres of racing motor vehicles and motor cycles.

A very important problem in motor vehicle and motor cycle racing applications is that of providing an electric device for power supplying, in a fully safe and protected manner, (for example with respect to voltage losses and short-circuits), thermocovering elements used for holding under controlled temperature conditions the motor vehicle and motor cycle tyres at the starting of the racing competition, or during such a competition, in particular as the tyres must be replaced.

Because of the multiple situations which could occur on the racing field, the mentioned device must be also safe with respect to the outside environment and under all climatic conditions.

In order to meet the above mentioned requirements, there are at present used different power supply devices to be directly connected to the supply mains which, because of its comparatively high voltage, represents a high risk of electrocution as well as of serious damages from short-circuits and the like.

In this connection it should be pointed out that the use of a conventional transformer would have, because of a comparatively high power drain, a great size and weight, with consequent drawbacks in shipment and conveyance operations, also considering the fact that conventionally used shipment media usually comprise aircrafts or the like.

Prior approaches, moreover, have not been found safe under all the climatic conditions in which the power supply system usually operates.

Thus, the mechanical operator boxes and related constructions on theracing field woul be subjected to dangerous and serious power failure conditions.

In fact, rain or snow or a high moisture level could deleteriously affect the power supply cables with a consequent power failure and dangerous and undesired short-circuits which could also damage the mentioned thermocovering elements.

### SUMMARY OF THE INVENTION

Accordingly, the aim of the present invention is to provide such an electric power supply device, specifically designed for motor vehicle and motor cycle racings, which is very reliable in operation, of small size and weight, and allows the thermocovering element to hold under a precisely controlled temperature condition motor vehicle and motor cycle tyres, and which, moreover, prevents voltage losses, back-outs, electrocutions, while preserving the integrity of the involved operators.

Within the scope of the above mentioned aim, a main object of the present invention is to provide such an electric power supply device which operates at a low voltage to prevent any dangerous situations like those deriving from a use of a high voltage apparatus.

Another object of the present invention is to provide such an electric power supply device which operates in a switching mode to provide a small size and light construction, with a volumetric reduction factor of about two and a weight reduction factor of about four, with respect to conventional transformer-based solutions.

A further object of the present invention is to provide such an electric power supply device including filtering and decoupling means adapted to provide an immediate decoupling of the electric line from the electric mains, in an overload condition, to prevent any short-circuit damages from occurring.

Yet another object of the present invention is to provide such an electric power supply device including a dedicated control system for properly controlling both the output voltage and current of said device.

Yet another object of the present invention is to provide such an electric power supply device which operates based on a digital microprocessor technology to provide both a very high accuracy in adjusting the output voltages and currents, as well as the advantage of monitoring in a real time all the voltage and current values as well as of the parameters related to the thermocovering element temperature, which parameters are provided by temperature sensors and displayed on suitable digital displays or personal computers.

Yet another object of the present invention is to provide such an electric power supply device which is adapted to customize the voltage and current control parameters and allow a full programming thereof.

Yet another object of the present invention is to provide such a microprocessor based electric power supply device which is adapted to perform a fine tuning of the operating parameters, included the transient phenomena due to temperature increases or decreases, and to set safety threshold values in dependance on the used racing tyres.

Yet a further object of the present invention is to provide such an electric power supply device including input and output filter means for filtering off the outer noise and providing a full insulation of the outer environment from possible spikes due to the switching transients of inner elements, thereby allowing the subject device to be safely used in industrial environments, in accordance with the enforcing standardizing rules.

Yet another object of the present invention is to provide such an electric power supply device which, in addition to being very reliable, safe and of small size and weight, is also adapted to provide a very flexible and accurate operation, both in detecting overloads and supplying electric power for thermostatic holding and thermal detection applications.

Yet another object of the present invention is to provide such an electric power supply device which is very competitive from a mere economic standpoint.

According to one aspect of the present invention, the above mentioned aim and objects, as well as yet other objects, which will become more apparent hereinafter, are achieved by a low voltage electric power supply device for power supplying professional thermocovering elements, for holding under controlled temperature conditions racing motor vehicle and motor cycle tyres, characterized in that said device comprises a unit to be coupled to the electric mains for supplying two tyre thermocovering elements, and in that said device is implemented by a switching technology, with respect to the power circuitry, and a digital microprocessor technology, with respect to the control electronic part thereof.

### BRIEF DESCRIPTION OF THE DRAWINGS

Further characteristics and advantages of the present invention will become more apparent hereinafter from the following detailed disclosure of a preferred, though not exclusive, embodiment of an electric power supply device for supplying, with a low voltage, professional thermocovering elements for holding under a controlled temperature condition racing motor vehicle and motor cycle tyres, which is illustrated, by way of an indicative, but not limitative, example, in the figures of the accompanying drawings, where:

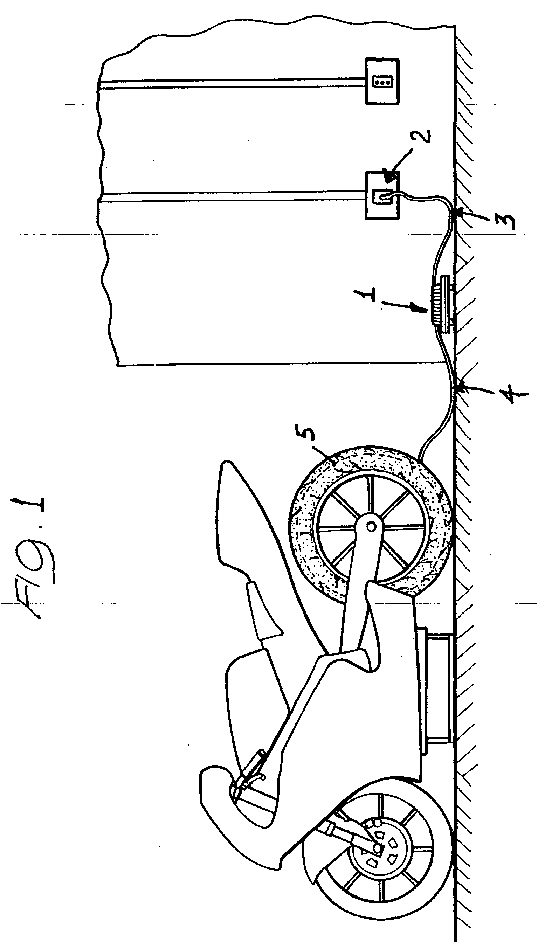

Figure 1 is a general side view of the low-voltage power supply device for power supplying professional thermocovering elements according to the invention, coupled to the electric mains and during the operation thereof;

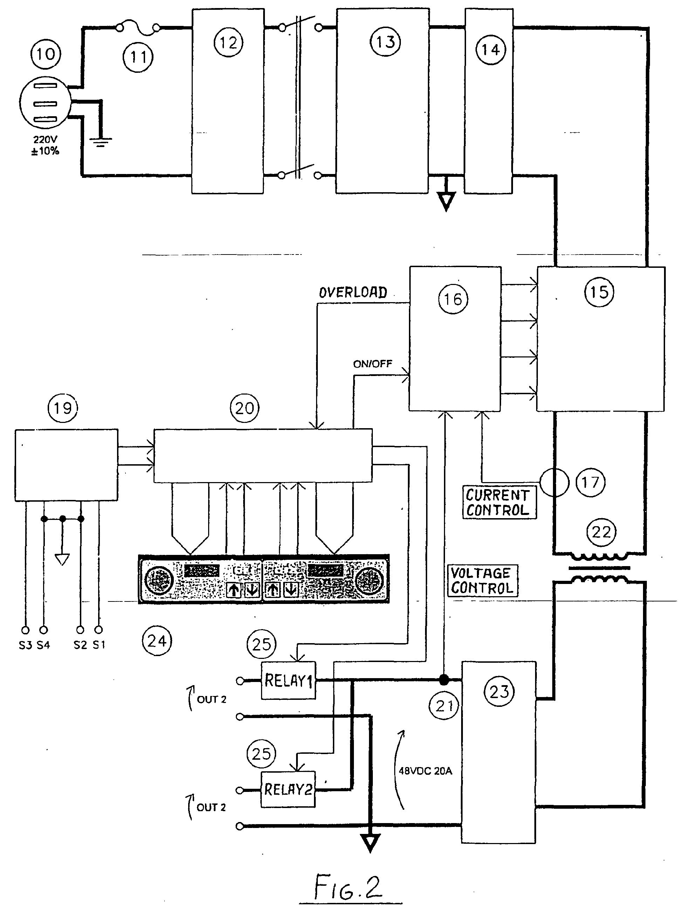

Figure 2 is a block diagram of the construction of the power supply device according to the invention;

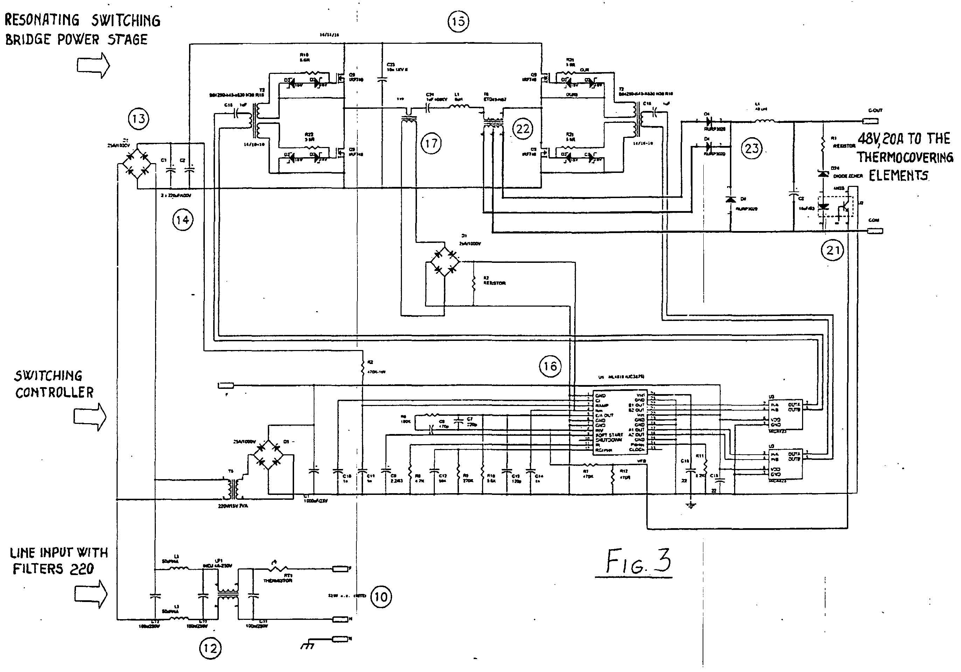

Figure 3 illustrates an electric diagram of the power supply line including the control system therefor;

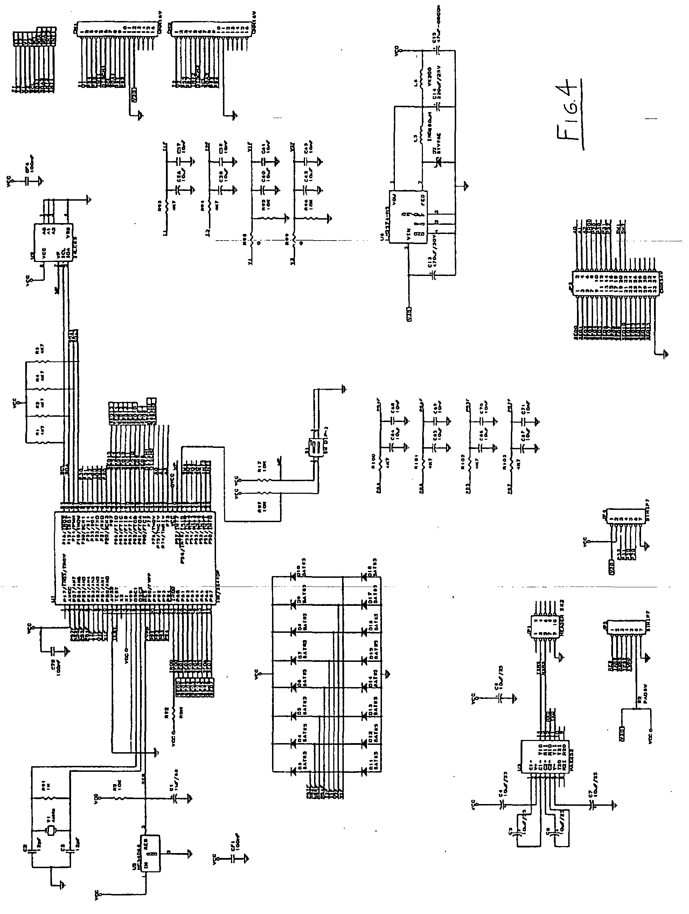

Figure 4 illustrates possible circuit implementations, with specific reference to the primary elements of the microprocessor card; and

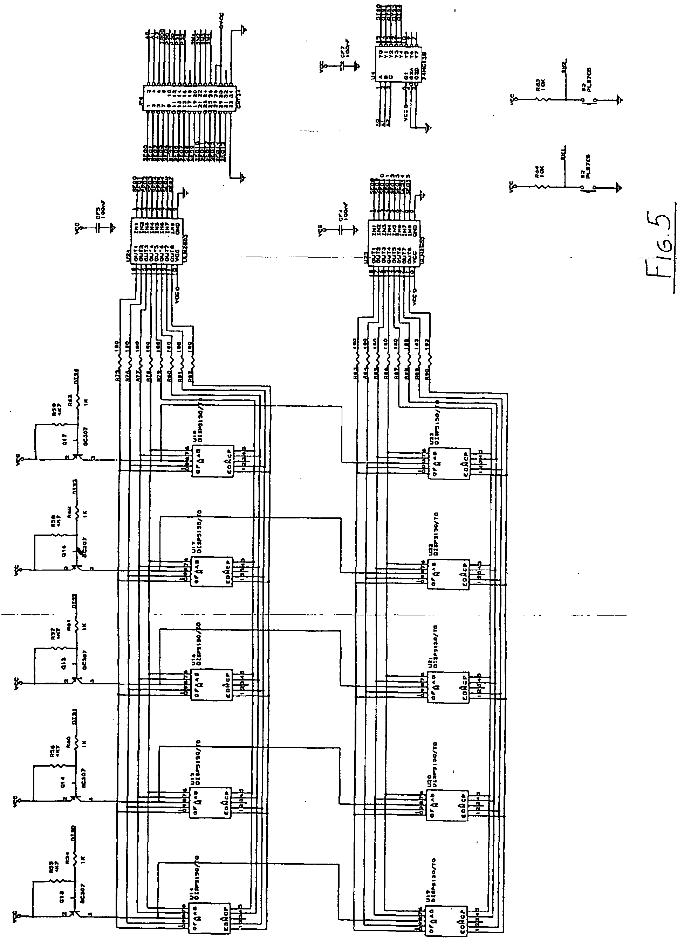

Figure 5 illustrates further details related to the circuit implementation of the panel drivers with related display arrangement.

### DESCRIPTION OF THE PREFERRED EMBODIMENTS

With reference to the number references of the above mentioned figures, the low-voltage power supply device for power supplying professional thermocovering elements for holding under controlled temperature conditions racing motor vehicle and motor cycle tyres, according to the present invention, and generally indicated by the reference number 1, is coupled to a generic current socket 2 (220 V) through a coupling cable (3), and providing, at the output thereof, through cables 4, a low-voltage electric supply for power supplying the thermocovering element 5 including a thermal sensor.

More specifically, the cables 4 are provided, in addition to their two inner conductors for supplying two thermocovering elements by providing at their terminals OUT1 and OUT2 a D.C. voltage of 48v, (with a total current value supplied to each thermocovering element of 20A, 10A) with four additional conductors carrying the signals coming from two wire sensors of the DS1820 type, which are housed in the respective thermocovering elements.

In particular, the signals from the sensors of the first thermocovering element are supplied to the terminals S1 and S2, whereas those of the sensor of the second thermocovering element are supplied to the terminals S3 and S4.

Inside the subject device, said signals are conditioned by the block 19, which supplies said signals, at the proper levels, to the adjusting and functional core of the system, which comprises the card 20 supporting the HITACHI H8/3644 microprocessor, where they are processed.

The card 20, in particular, also drives a panel 24 for setting and displaying several parameters.

The processing and amplifying subsystem 19, together with the card 20, the panel 24 and second stage 18, form a a system portion specifically designed for detecting, managing and monitoring the temperature.

The control portion of the thermocovering element power supply device comprises a controller 16, operating on the power delivery system through a resonating bridge inverter 15, made in a MOFSET technology, and with a Zero Voltage Switching, which power supplies the primary coil of the transformer 22, while providing a proper insulation from the power system coupled to the electric mains.

This Zero Voltage Switching system represents an optimum designing solution since allows to reduce to a minimum the high frequency noise and provide a very high efficiency system.

A voltage feedback from the branch 21 allows the controller 16 to provide an output voltage within limits preset by the industrial safety standardization.

A current feedback from the branch 17 operates under any overload or output short-circuit conditions.

This information is also sent to the processor card 20, which will supply alarm signals to the user and, in the case of repeated overload and/or short circuit vents, will disable the system and, accordingly, the electric power supply.

From the current plug 10 starts a power supply system including a safety fuse 11, an input decoupling EMI 12 filter insulating, together with the output filter and converter Buck 23, the system from any significative noise coming from the outside environment and designed for locking any significative noise generated by the inner switching elements toward the outside.

The D.C. power supply line, provided with a rectifier diode bridge 13 and a filter capacitor bank 14, transforms the mains AC voltage and current to a DC voltage and current.

The resonating bridge inverter 15, in turn, generates a square wave having a frequency of 300 KHz to be supplied to the primary coil of the transformer 22.

From the high frequency secondary coil of the transformer 22, it is possible to take a voltage, which, upon rectifying and filtering by the converter Buck 23, will supply a D.C. 48 volt voltage level for power supplying the thermocovering elements which, from a mere electric standpoint, comprise resistances having a conventional value of about 4.8 Ohm, and with a power drain of 480 W.

The two relays 25 allow to control and disconnect, if necessary, in an independent manner (i.e. a separated manner), the two thermocovering elements.

The power supply line or chain, comprising the lug 10, fuse 11, EMI 12 filter, rectifier 13, capacitive filter 14, resonating bridge inverter 15, transformer 22, converter Buck 23, will take the electric mains voltage and supply at the terminals OUT1 and OUT2 a D.C. 48 voltage with a current of 10 A to be delivered to each said thermocovering element.

The device, which provides a power of about 1 KW, is enclosed in a casing having the following size: 29 cm at the bottom, 6.2 cm of height and 26 cm of depth, from which the coupling cables 3 and 4 extend.

From the above disclosure it should be apparent that the invention fully achieves the intended aim and objects.

In particular, a very small size, light, electrically and electromagnetically insulated, reliable and safe device has been provided, which allows to reliable power supply professional thermocovering elements (of a low-voltage supplied type), for holding under a controlled temperature racing motor vehicle and motorcycle tyres.

The invention as disclosed, is susceptible to several modifications and variations, all of which will come within the scope of the invention.

In particular, an important modified embodiment would comprise a fully resonating bridge inverter 15 generating, on the secondary side thereof, a sinusoidal Voltage having a RMS value of 48 V and a frequency of 20 KHz, to be directly applied to the thermocovering element.

Moreover, all of the constructional details can be replaced by other technically equivalent elements.

In practicing the invention, the used materials, as well as the contingent size and shapes, can be any, depending on requirements.

## Claims

1. An electric power supply device for power supplying professional thermocovering elements for holding under a controlled temperature condition racing motor vehicle and motor cycle tyres, **characterized in that** said device comprises a unit (1) to be coupled to a socket (2) of the electric mains by a coupling cable (3), for power supplying, through further cables (4), tyre thermocovering elements, and in that said device provides a D.C. low voltage and a D.C. current for power supplying said thermocovering elements.

2. A low voltage electric power supply device for power supplying professional thermocovering elements, according to the preceding claim, **characterized in that** said cables (4) comprise inner conductors for power supplying, at terminals OUT1 and OUT2 thereof, two thermocovering elements, with a D.C. voltage of 48 V and a D.C. current of 20A (10 A for each thermocovering element), and four conductors for two wire sensors of a DS1820 type housed in said thermocovering elements.

3. A low voltage electric power supply device for power supplying professional thermocovering elements, according to Claims 1 and 2, **characterized in that** said device comprises a microprocessor system for processing electric signals sent from thermal sensors.

4. A low voltage electric power supply device for power supplying professional thermocovering elements, according to one or more of the preceding claims, **characterized in that** said signals from said sensors, being supplied at terminals S1-S2 and S3-S4, are conditioned by a conditioning block (19) supplying said signals, at proper signal levels, to an adjusting and operating core of the system, including a card (20) supporting a HITACHI H8/3644 microprocessor.

5. A low voltage electric power supply device for power supplying professional thermocovering elements, according to Claim 4, **characterized in that** said card (20) drives a panel (24) for setting and displaying operating parameters.

6. A low voltage electric power supply device for power supplying professional thermocovering elements, according to one or more of the preceding claims, **characterized in that** said device further comprises a microprocessor system adapted to be interfaced with an information processor for processing data, such as a personal computer.

7. A low voltage electric power supply device for power supplying professional thermocovering elements, according to Claim 6, **characterized in that** said device is made by an analogic switching technology, with respect to the power circuitry portion thereof, and by a digital microprocessor technology with respect to an electronic control portion thereof.

8. A low voltage electric power supply device for power supplying professional thermocovering elements, according to one or more of the preceding claims, **characterized in that** said device further comprises a power supply control subsystem including a controller (16) driving a resonating bridge inverter (15), made by a MOSFET technology with a Zero Voltage Switching, and supplying a primary coil of a transformer (22) insulating the power system directly coupled to the electric mains.

9. A low voltage electric power supply device for power supplying professional thermocovering elements, according to one or more of the preceding claims, **characterized in that** said device comprises a control system (16) for either supplying or decoupling electric power through a digital controller processing signals coming from current and voltage feedback arrangements and relays (25) on output terminals controlling and/or separately disconnecting said thermocovering elements.

10. A low voltage electric power supply device for power supplying professional thermocovering elements, according to one or more of the preceding claims, **characterized in that** said device comprises in a power supply line thereof a high frequency transformer.

11. A low voltage electric power supply device for power supplying professional thermocovering elements, according to one or more of the preceding claims, **characterized in that** the power supply line of said device comprises a plug (10), a fuse (11), an EMI 12 filter, a rectifier (13), a capacitive filter (14), a resonating bridge inverter (15), a transformer (22) and a converter Buck (23).

12. A low voltage electric power supply device for power supplying professional thermocovering elements, according to one or more of the preceding claims, **characterized in that** said device takes the main voltage and provides, at terminals OUT1 and OUT2 thereof a D.C. 48 volt voltage, while controlling a power of about 1 KW.

13. A low voltage electric power supply device for power supplying professional thermocovering elements, according to one or more of the preceding claims and substantially as broadly disclosed and illustrated and for the intended objects.
